# EUROPEAN PATENT APPLICATION

(11) **EP 4 654 451 A1**
(43) Date of publication of application: **26.11.2025**
(21) Application number: 23917431.1
(22) Date of filing: 17.01.2023
(51) Int. Cl.: H02M 3/00, G05F 1/00

(54) **ELECTRIC POWER CONVERSION DEVICE**

(71) Applicant: NISSAN MOTOR CO., LTD., Yokohama-shi, Kanagawa 220-8623 (JP)
(72) Inventor: ABETA, Hiroyuki, Atsugi-shi, Kanagawa 243-0123 (JP)
(74) Representative: Hoefer & Partner Patentanwälte mbB
(86) International application number: PCT/JP2023/001137
(87) International publication number: WO 2024/154216

(57) **Abstract**

In a power conversion device 20 in which multiple DC-DC converters are connected in parallel, each of multiple DC-DC converters 21 to 2n has a current control value set as a maximum current value capable of being output. Each of the multiple DC-DC converters 21 to 2n has a control unit configured to control a value of an output voltage of each of the multiple DC-DC converters 21 to 2n such that a value of an output current of each of the multiple DC-DC converters 21 to 2n does not exceed the current control value. A power capacity and a current control value of a first DC-DC converter 21 included in the multiple DC-DC converters 21 to 2n differ from a power capacity and a current control value of a second DC-DC converter 22 included in the multiple DC-DC converters 21 to 2n.

## Description

### TECHNICAL FIELD

The present invention relates to a power conversion device.

### BACKGROUND ART

Patent Literature 1 discloses a power conversion device in which two DC-DC converters (first power conversion unit and second power conversion unit) for converting power between a first conductive path and a second conductive path are connected in parallel. The power conversion device can be switched to a first operating state in which only the second power conversion unit of the first power conversion unit and the second power conversion unit operates when a value of the output current output via the second conductive path is less than a first threshold. The power conversion device of Patent Literature 1 can be switched to a second operating state in which at least the first power conversion unit of the first power conversion unit and the second power conversion unit operates when a value of the output current is equal to or greater than the first threshold, or equal to or greater than a second threshold which is greater than the first threshold. In the technology of Patent Literature 1, the above configuration allows the power conversion device in which multiple DC-DC converters are connected in parallel to operate according to the load condition.

### CITATION LIST

### PATENT LITERATURE

Patent Literature 1: WO 2021-182447

### SUMMARY OF INVENTION

### TECHNICAL PROBLEM

However, the power conversion device of Patent Literature 1 requires a central control unit for parallel operation that transmits a control signal to each DC-DC converter for performing a parallel operation by cooperating multiple DC-DC converters connected in parallel. In addition, a signal line connecting the central control unit and each DC-DC converter is required. Therefore, the configuration of the power conversion device is complicated.

The present invention has been made in view of the above problem, and an object of the present invention is to provide a power conversion device that further simplifies a configuration of the power conversion device without requiring a central control unit for operating multiple DC-DC converters in parallel.

### TECHNICAL SOLUTION

A power conversion device according to an aspect of the present invention is a power conversion device in which multiple DC-DC converters are connected in parallel, in which each of the multiple DC-DC converters has a current control value set as a maximum current value capable of being output, and each of the multiple DC-DC converters has a control unit configured to control a value of an output voltage of each of the multiple DC-DC converters such that a value of an output current of each of the multiple DC-DC converters does not exceed the current control value, and a power capacity and the current control value of a first DC-DC converter included in the multiple DC-DC converters differ from the power capacity and the current control value of a second DC-DC converter included in the multiple DC-DC converters.

### ADVANTAGEOUS EFFECTS

An aspect of the present invention makes it possible to further simplify a configuration of a power conversion device without requiring a central control unit for operating multiple DC-DC converters in parallel.

### BRIEF DESCRIPTION OF DRAWINGS

[FIG. 1] FIG. 1 is a block diagram schematically illustrating an in-vehicle power supply system including a power conversion device according to an embodiment.
[FIG. 2] FIG. 2 is a block diagram illustrating an example of a configuration of the power conversion device according to a first embodiment.
[FIG. 3] FIG. 3 is a graph illustrating a relationship between an output current of the power conversion device according to the first embodiment, and a first output voltage and a second output voltage.
[FIG. 4] FIG. 4 is a graph illustrating a relationship between an output current of a power conversion device according to a second embodiment, and a first output voltage and a second output voltage.
[FIG. 5A] FIG. 5A is a diagram explaining the changes in the first output voltage and the second output voltage when the output current increases or decreases rapidly in FIG. 3.
[FIG. 5B] FIG. 5B is a diagram explaining the changes in the first output voltage and the second output voltage when the output current increases or decreases rapidly in FIG. 3.
[FIG. 6A] FIG. 6A is a graph illustrating an example of current-voltage characteristics of a first power conversion unit and a second power conversion unit when each of the first power conversion unit and the second power conversion unit of a power conversion device according to a third embodiment is operated alone.
[FIG. 6B] FIG. 6B is a diagram explaining the operation of the first power conversion unit and the second power conversion unit in FIG. 6A.
[FIG. 7A] FIG. 7A is a diagram explaining the changes in the first output voltage and the second output voltage when a load current increases or decreases rapidly in FIG. 6B.
[FIG. 7B] FIG. 7B is a diagram explaining the changes in the first output voltage and the second output voltage when a load current increases or decreases rapidly in FIG. 6B.
[FIG. 8A] FIG. 8A is a diagram explaining the changes in the first output voltage and the second output voltage when the second output voltage decreases from 14V in FIG. 4.
[FIG. 8B] FIG. 8B is a graph illustrating an example of current-voltage characteristics of a first power conversion unit and a second power conversion unit when each of the first power conversion unit and the second power conversion unit of a power conversion device according to a fourth embodiment is operated alone.
[FIG. 8C] FIG. 8C is a diagram explaining the operation of the first power conversion unit and the second power conversion unit in FIG. 8B.
[FIG. 9] FIG. 9 is a flowchart illustrating an example of the operation of the first control unit and the second control unit of the power conversion device according to a first modified example of the fourth embodiment.
[FIG. 10] FIG. 10 is a graph illustrating an example of the conditions of a current occupancy rate and a current change rate in the power conversion device according to a modified example of the fourth embodiment.
[FIG. 11] FIG. 11 is a graph illustrating an example of the conditions of the current occupancy rate and the current change rate in the power conversion device according to the modified example of the fourth embodiment.
[FIG. 12] FIG. 12 is a block diagram schematically illustrating an in-vehicle power supply system including a power conversion device according to a fifth embodiment.
[FIG. 13] FIG. 13 is a block diagram illustrating an example of a configuration of the power conversion device according to the fifth embodiment.

### DESCRIPTION OF EMBODIMENTS

Hereinafter, embodiments of the present invention and modified examples of the embodiments will be described below with reference to the drawings. In the drawings, the same parts are denoted by the same reference numerals and a description thereof will be omitted.

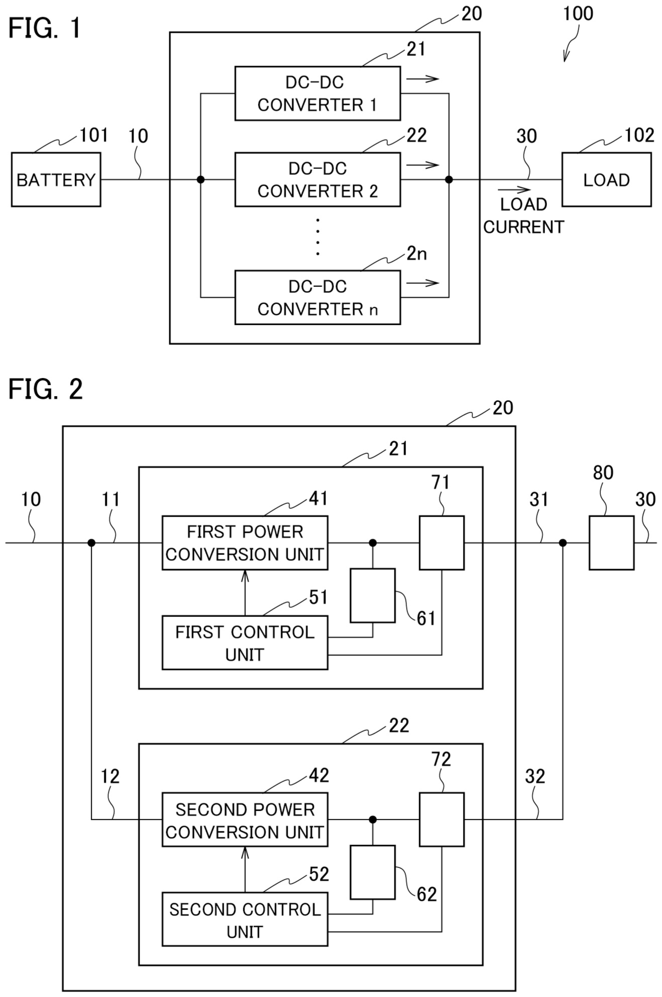

First, an outline of an in-vehicle power supply system including a power conversion device according to an embodiment of the present invention will be described. The in-vehicle power supply system 100 illustrated in FIG. 1 can function as an in-vehicle DC voltage supply system installed in a vehicle such as an electric vehicle. The power supply system 100 can supply a constant DC voltage to a load 102. The power supply system 100 includes a power conversion device 20 and a battery 101.

The load 102 may be any electrical device as long as it is installed in the vehicle, and may be, for example, an accessory device (cell motor, alternator, radiator cooling fan, or the like) required to operate an engine or a motor. The type and number of the loads 102 are not limited, and the load 102 may include an electric power steering system, an electric parking brake, a lighting system, a wiper drive unit, a navigation unit, and the like.

The battery 101 is a battery (e.g., a secondary battery) that supplies a high voltage (e.g., 300 V). The positive terminal on the high potential side in the battery 101 is electrically connected to a first conductive path 10. The negative terminal on the low potential side in the battery 101 is electrically connected to a ground (not illustrated).

The power conversion device 20 includes multiple DC-DC converters 21 to 2n. The multiple DC-DC converters 21 to 2n are connected in parallel between the first conductive path 10 and the second conductive path 30. The power conversion device 20 is a device that performs power conversion between the first conductive path 10 and the second conductive path 30. The power conversion device 20 can perform the operation that steps down an input voltage input from the battery 101 via the first conductive path 10 and applies an output voltage lower than the voltage of the first conductive path 10 to the second conductive path 30.

In the present specification, "voltage" means a potential difference from a reference potential unless otherwise specifically described. For example, a voltage of the first conductive path 10 means a potential difference between the first conductive path 10 and the reference potential, and a voltage of the second conductive path 30 means a potential difference between the second conductive path 30 and the reference potential. In the following example, the conductive path generating the reference potential on the first conductive path 10 side and the conductive path generating the reference potential on the second conductive path 30 side are insulated from each other. Each of the multiple DC-DC converters 21 to 2n converts a DC voltage input from the battery 101 into a predetermined output voltage, and outputs the converted DC voltage from each output terminal. The above configuration allows the power conversion device 20 to output a load current to the load 102.

In the power conversion device 20 according to one embodiment, each of the multiple DC-DC converters 21 to 2n has a current control value set as a maximum current value capable of being output. Each of the multiple DC-DC converters 21 to 2n has a control unit that controls a value of an output voltage of each of the multiple DC-DC converters 21 to 2n such that a value of an output current of each of the multiple DC-DC converters 21 to 2n does not exceed the current control value. The power capacity and current control value of the first DC-DC converter 21 included in the multiple DC-DC converters 21 to 2n differ from the power capacity and current control value of the second DC-DC converter 22 included in the multiple DC-DC converters 21 to 2n.

### [First Embodiment]

In the following description, a first embodiment to which the present invention is applied will be described with reference to the drawings, taking as an example a case in which two DC-DC converters are connected in parallel. In the drawings, the same parts are denoted by the same reference numerals and a description thereof will be omitted.

FIG. 2 is a block diagram illustrating an example of a configuration of the power conversion device 20 according to the first embodiment. For example, the power conversion device 20 includes two DC-DC converters (first and second DC-DC converters) 21 and 22 connected in parallel. Specifically, a first power conversion unit 41 of the first DC-DC converter 21 and a second power conversion unit 42 of the second DC-DC converter 22 are connected in parallel between the first conductive path 10 and the second conductive path 30.

The first DC-DC converter 21 includes the first power conversion unit 41 that performs power conversion, a first control unit 51 that is a control unit in the first DC-DC converter, a first voltage value detection unit 61, and a first current value detection unit 71.

The first power conversion unit 41 converts a power input from the first conductive path 10 via the first input path 11, and outputs the power to the second conductive path 30 via the first output path 31. The first input path 11 is a conductive path branched from the first conductive path 10, and has one end that is electrically connected to the first conductive path 10 and the other end that is electrically connected to the first power conversion unit 41. The first output path 31 has one end that is electrically connected to the first power conversion unit 41 and the other end that is electrically connected to the second conductive path 30.

The first voltage value detection unit 61 detects a voltage value of the first output path 31 and inputs a signal indicating the voltage value to the first control unit 51. When the first power conversion unit 41 performs a power conversion operation, the first voltage value detection unit 61 detects a voltage value of the first output voltage applied to the first output path 31 by the first power conversion unit 41.

The first current value detection unit 71 is interposed in the middle of the first output path 31. The first current value detection unit 71 detects a current value flowing through the first output path 31 and inputs a signal indicating the current value to the first control unit 51. When the first power conversion unit 41 performs a power conversion operation (specifically, a step-down operation), the first current value detection unit 71 detects a current value of the first output current output by the first power conversion unit 41 via the first output path 31.

The first control unit 51 is configured as a control device having an information processing function, and is configured by a microcomputer including an internal memory, for example. The internal memory stores a program to be executed by the first control unit 51, necessary parameters, and the like. The first control unit 51 calculates a set value necessary for the operation of the first power conversion unit 41 and sets the value to the first power conversion unit 41.

The first control unit 51 sets a first current control value as a maximum current value capable of being output by the first power conversion unit 41. The first control unit 51 controls a first output voltage that is an output voltage of the first power conversion unit 41 such that a value of a first output current that is an output current of the first power conversion unit 41 does not exceed the first current control value. The details of the operation in which the first control unit 51 controls the first output voltage will be described later.

Here, a current-voltage characteristic of the first power conversion unit 41 when the first power conversion unit 41 is operated alone is constant, and in the present embodiment, a value of the first output voltage is constant relative to a value of the first output current.

The second DC-DC converter 22 includes the second power conversion unit 42 that performs power conversion, a second control unit 52 that is a control unit in the second DC-DC converter, a second voltage value detection unit 62, and a second current value detection unit 72. The power capacity of the second DC-DC converter 22 is smaller than that of the first DC-DC converter.

The second power conversion unit 42 converts a power input from the first conductive path 10 via the second input path 12 and outputs the power to the second conductive path 30 via the second output path 32. The second input path 12 is a conductive path branched from the first conductive path 10, and has one end that is electrically connected to the first conductive path 10 and the other end that is electrically connected to the second power conversion unit 42. The second output path 32 has one end that is electrically connected to the second power conversion unit 42 and the other end that is electrically connected to the second conductive path 30.

The second voltage value detection unit 62 detects a voltage value of the second output path 32 and inputs a signal indicating the voltage value to the second control unit 52. When the second power conversion unit 42 performs a power conversion operation, the second voltage value detection unit 62 detects a voltage value of the second output voltage applied to the second output path 32 by the second power conversion unit 42.

The second current value detection unit 72 is interposed in the middle of the second output path 32. The second current value detection unit 72 detects a current value flowing through the second output path 32 and inputs a signal indicating the current value to the second control unit 52. When the second power conversion unit 42 performs a power conversion operation (specifically, a step-down operation), the second current value detection unit 72 detects a current value of the second output current output by the second power conversion unit 42 via the second output path 32.

The second control unit 52 is configured as a control device having an information processing function, and is configured by a microcomputer including an internal memory, for example. The internal memory stores a program to be executed by the second control unit 52, necessary parameters, and the like. The second control unit 52 calculates a set value necessary for the operation of the second power conversion unit 42 and sets the value to the second power conversion unit 42.

The second control unit 52 sets a second current control value as a maximum current value capable of being output by the second power conversion unit 42. Here, the second current control value is set to a value lower than the first current control value. The second control unit 52 controls a second output voltage that is an output voltage of the second power conversion unit 42 such that a value of a second output current that is an output current of the second power conversion unit 42 does not exceed the second current control value. The details of the operation in which the second control unit 52 controls the second output voltage will be described later.

Here, a current-voltage characteristic of the second power conversion unit 42 when the second power conversion unit 42 is operated alone is constant, and in the present embodiment, a value of the second output voltage is constant relative to a value of the second output current.

In addition, the second control unit 52 is connected to a load current value detection unit 80 provided in the power conversion device 20. The load current value detection unit 80 is interposed in the middle of the second conductive path 30. The load current value detection unit 80 detects a current value flowing through the second conductive path 30, and inputs a signal indicating the current value to the second control unit 52. When the first and second power conversion units 41 and 42 perform a power conversion operation (specifically, a step-down operation), the load current value detection unit 80 detects a value of the output current that is output by the power conversion device 20 via the second output path 32. Here, the output current output by the power conversion device 20 via the second output path 32 is the load current output to the load 102 connected to the power conversion device 20. That is, the load current value detection unit 80 detects a current value of the load current.

### [Operation of first control unit and second control unit]

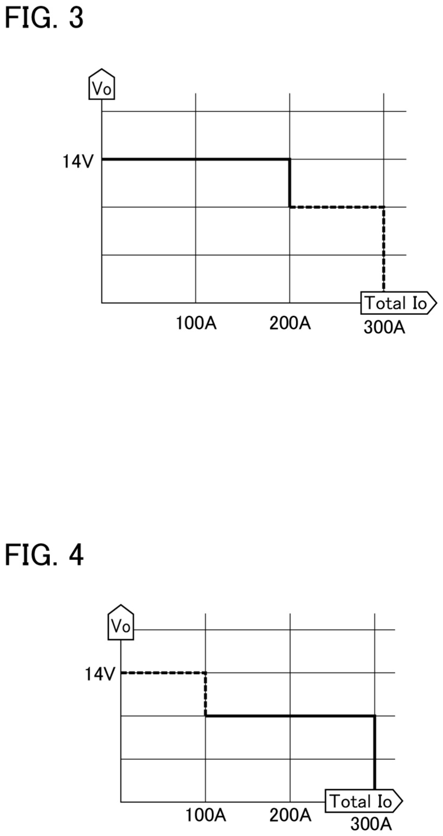

The operation of the first control unit 51 and the second control unit 52 in the first embodiment will be described with reference to FIG. 3. In the following description, it is assumed that the first current control value of the first power conversion unit 41 is set to 200 A, and the second current control value of the second power conversion unit 42 is set to 100 A. The values of the first current control value and the second current control value are not limited as long as the second current control value is set to a value less than the first current control value.

FIG. 3 is a graph illustrating the relationship between the output current (load current) of the power conversion device 20 according to the first embodiment, and the first output voltage and the second output voltage. In FIG. 3, the horizontal axis indicates the output current of the power conversion device 20, that is, the value of the load current output from the power conversion device 20 to the load 102, and the vertical axis indicates the values of the first output voltage and the second output voltage. In FIG. 3, the solid line indicates the value of the first output voltage, and the dashed line indicates the value of the second output voltage.

In the example illustrated in FIG. 3, the first control unit 51 first controls the first output voltage to 14 V (the first voltage value). When the value of the first output current increases to 200 A, the first control unit 51 decreases the first output voltage from 14 V such that the first output current does not exceed 200 A. The second control unit 52 also controls the second output voltage to 13 V (the second voltage value). Here, the values of the first output voltage and the second output voltage are not limited as long as the second output voltage is set to a value lower than the first output voltage.

In FIG. 3, only the first power conversion unit 41, which has a higher output voltage than the second power conversion unit 42, outputs the first output current until the load current changes from 0 A to 200 A which is the first current control value. When the current value of the first output current increases to 200 A, the first output voltage decreases from 14 V to 13 V such that the first output current does not exceed 200 A, and the second power conversion unit 42 starts to output the second output current.

That is, the first output current is output only from the first power conversion unit 41 until the load current becomes the first current control value. When the load current becomes the first current control value or more, the second output current is also output from the second power conversion unit 42, so that the output current obtained by adding the first output current and the second output current is output from the power conversion device 20.

Thus, the power conversion device 20 according to the first embodiment switches between a state in which power is output only from the first power conversion unit 41 having a larger power capacity and a state in which power is output from both the first and second power conversion units 41 and 42, based on the value of the load current.

### (Operation and effect)

As described above, according to the first embodiment, the following operation and effect can be obtained.

The power conversion device 20 according to the first embodiment is a power conversion device in which multiple DC-DC converters 21 to 2n are connected in parallel. Each of the multiple DC-DC converters 21 to 2n has a current control value set as a maximum current value capable of being output. Each of the multiple DC-DC converters 21 to 2n has a control unit that controls a value of an output voltage of each of the multiple DC-DC converters 21 to 2n such that a value of an output current of each of the multiple DC-DC converters 21 to 2n does not exceed the current control value. The power capacity and current control value of the first DC-DC converter 21 included in the multiple DC-DC converters 21 to 2n differ from the power capacity and current control value of the second DC-DC converter 22 included in the multiple DC-DC converters 21 to 2n.

Each of the multiple DC-DC converters 21 to 2n connected in parallel and having different power capacities and current control values has a control unit that controls an output voltage of each of the multiple DC-DC converters 21 to 2n such that a value of an output current of each of the multiple DC-DC converters 21 to 2n does not exceed a current control value of each of the multiple DC-DC converters 21 to 2n. This makes it possible to control the multiple DC-DC converters 21 to 2n appropriately according to the state of the load connected to the output of the power conversion device 20 without providing a central control unit for parallel operation that transmits a control signal to each DC-DC converter for performing a parallel operation by cooperating the multiple DC-DC converters connected in parallel. In addition, a signal line connecting the central control unit and each DC-DC converter is not required. Therefore, the configuration of the power conversion device can be further simplified. This makes it possible to decrease the manufacturing cost of the power conversion device 20. Further, this allows for space-saving in the installation space for the signal line. The influence of noise on the signal line can be eliminated, thereby suppressing a malfunction in the vehicle under high noise conditions.

Further, in the power conversion device 20 according to the first embodiment, a current-voltage characteristic of each of the multiple DC-DC converters 21 to 2n when each of the multiple DC-DC converters 21 to 2n is operated alone is constant.

Further, in the power conversion device 20 according to the first embodiment, when the multiple DC-DC converters 21 to 2n include the first and second DC-DC converters 21 and 22, the first DC-DC converter 21 has a first current control value set as a maximum current value capable of being output. The first DC-DC converter 21 has the first control unit 51 that controls the first output voltage that is the output voltage of the first DC-DC converter 21 such that the value of the first output current that is the output current of the first DC-DC converter 21 does not exceed the first current control value. In addition, the second DC-DC converter 22 has a second current control value set as a maximum current value capable of being output. The second DC-DC converter 22 has the second control unit 52 that controls the voltage value of the second output voltage that is the output voltage of the second DC-DC converter 22 such that the current value of the second output current that is the output current of the second DC-DC converter 22 does not exceed the second current control value. In addition, the power capacity of the second DC-DC converter 22 is smaller than the power capacity of the first DC-DC converter 21, and the second current control value is lower than the first current control value.

Further, in the power conversion device 20 according to the first embodiment, each of the current-voltage characteristics of the first and second DC-DC converters 21 and 22 when each of the first and second DC-DC converters 21 and 22 is operated alone is such that the values of the first output voltage and the second output voltage are constant relative to the values of the first output current and the second output current.

The control unit 51 of the first DC-DC converter 21 and the control unit 52 of the second DC-DC converter 22 having a smaller power capacity and a smaller current control value than those of the first DC-DC converter 21 control the output voltages of the first and second DC-DC converters 21 and 22 such that the values of the output currents of the first and second DC-DC converters 21 and 22 do not exceed the current control values of the first and second DC-DC converters 21 and 22. Thus, the first state in which power is output from either the first or second DC-DC converter and the second state in which power is output from both the first and second DC-DC converters are switched, based on the value of the load current. The multiple DC-DC converters can be appropriately controlled according to the state of the load connected to the output of the power conversion device without providing a central control unit.

Further, the first control unit 51 of the power conversion device 20 according to the first embodiment controls the first output voltage to the first voltage value, and the second control unit 52 controls the second output voltage to the second voltage value less than the first voltage value. The first control unit 51 decreases the first output voltage when the value of the first output current becomes the first current control value.

Thus, the first output current is output only from the first DC-DC converter 21 having a larger power capacity until the load current becomes the first current control value. When the load current increases to the first current control value, the second DC-DC converter 22 having a smaller power capacity also outputs the second output current because the first control unit 51 decreases the first output voltage. The power conversion device 20 first operates only the first DC-DC converter 21 to output the power, and only when the load increases, the power conversion device 20 operates the second DC-DC converter 22 having a smaller power capacity, thereby making it possible to output the power. Therefore, it is possible to reduce the frequency that the second DC-DC converter 22 is operated, thereby selecting components with a shorter lifespan than the first DC-DC converter 21.

### [Second Embodiment]

Hereinafter, a second embodiment to which the present invention is applied will be described below with reference to the drawings. In the drawings, the same parts are denoted by the same reference numerals and a description thereof will be omitted. The power conversion device according to the second embodiment differs from the power conversion device according to the other embodiments in the operation of the first control unit 51 and the second control unit 52. The other configurations are the same as those of the power conversion device 20 illustrated in FIG. 2. Therefore, the different parts will be described mainly, and the same parts will not be described again.

An example of the operation of the first control unit 51 and the second control unit 52 of the power conversion device 20 according to the second embodiment will be described with reference to FIG. 4.

FIG. 4 is a graph illustrating the relationship between the output current (load current) of the power conversion device 20 according to the second embodiment, and the first output voltage and the second output voltage. In FIG. 4, the horizontal axis indicates the output current of the power conversion device 20, that is, the value of the load current output from the power conversion device 20 to the load 102, and the vertical axis indicates the values of the first output voltage and the second output voltage. In FIG. 4, the solid line indicates the value of the first output voltage, and the dashed line indicates the value of the second output voltage.

In the example illustrated in FIG. 4, the second control unit 52 controls the second output voltage to 14 V (first voltage value). In addition, the first control unit 51 controls the first output voltage to 13 V (second voltage value). When the value of the second output current increases to 100 A that is a second current limit value, the second control unit 52 decreases the second output voltage from 14 V such that the second output current does not exceed 100 A. Here, the values of the first output voltage and the second output voltage are not limited as long as the first output voltage is set to a value lower than the second output voltage.

In FIG. 4, only the second power conversion unit 42, which has a higher output voltage than the first power conversion unit 41, outputs the second output current until the load current changes from 0 A to 100 A which is the second current control value. When the current value of the second output current increases to 100 A, the second control unit 52 decreases the second output voltage from 14 V to 13 V such that the second output current does not exceed 100 A, and the first power conversion unit 41 starts to output the first output current.

That is, the second output current is output only from the second power conversion unit 42 until the load current becomes the second current limit value. When the load power becomes the second current limit value or more, the first output current is output from the first power conversion unit 41, so that the output current obtained by adding the first output current and the second output current is output from the power conversion device 20.

Thus, the power conversion device 20 according to the second embodiment switches between a state in which power is output only from the second power conversion unit 42 having a smaller power capacity and a state in which power is output from both the first and second power conversion units 41 and 42, based on the value of the load current.

### (Operation and effect)

As described above, according to the second embodiment, the following operation and effect can be obtained.

The second control unit 52 of the power conversion device 20 according to the second embodiment may control the second output voltage to the first voltage value, and the first control unit 51 may control the first output voltage to the second voltage value less than the first voltage value. In this case, the second control unit 52 decreases the second output voltage when the value of the second output current becomes the second current control value.

The second output current is output only from the second DC-DC converter 22 having a smaller power capacity until the load current becomes the second current control value. However, when the load current increases to the second current control value, the first DC-DC converter 21 having a larger power capacity also outputs the first output current because the second control unit 52 decreases the second output voltage. Thus, the power conversion device 20 first operates only the second DC-DC converter 22 to output the power, and when the load increases, the power conversion device 20 operates the second DC-DC converter 22 having a larger power capacity operates, thereby making it possible to output the power. Therefore, when the load is light, only the second DC-DC converter 22 having a smaller power capacity is operated, and when the load current increases to the second current control value or more, and the first DC-DC converter 21 having a larger power capacity is operated. This makes it possible to improve the overall power conversion efficiency.

### [Third Embodiment]

Hereinafter, a third embodiment to which the present invention is applied will be described below with reference to the drawings. In the drawings, the same parts are denoted by the same reference numerals and a description thereof will be omitted. The power conversion device according to the third embodiment differs from the power conversion device according to the other embodiments in the operation of the first control unit 51 and the second control unit 52. The other configurations are the same as those of the power conversion device 20 illustrated in FIG. 2. Therefore, the different parts will be described mainly, and the same parts will not be described again.

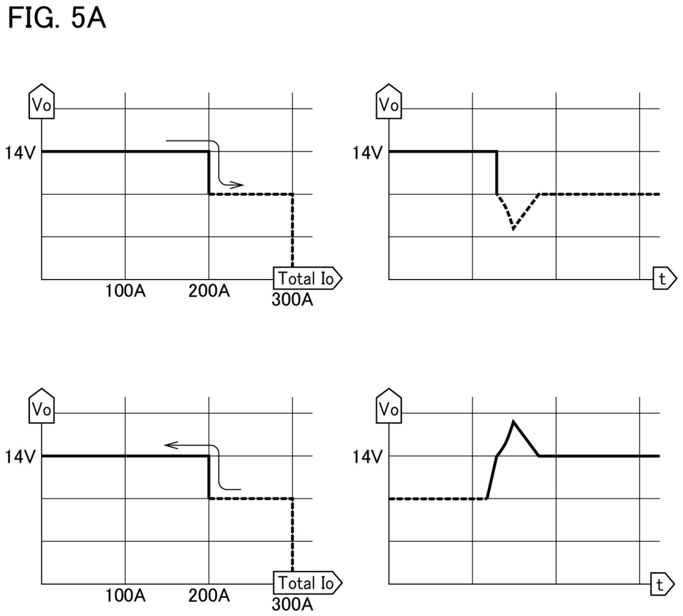

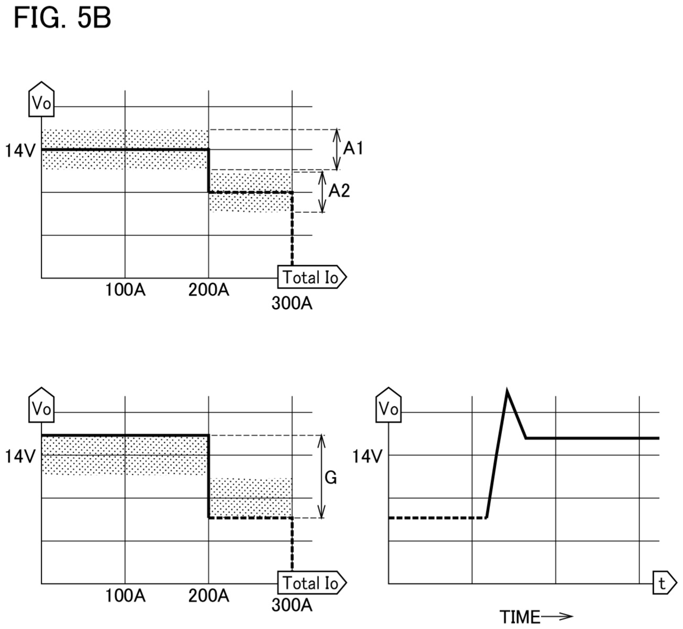

FIGS. 5A and 5B are diagrams explaining the changes in the first output voltage and the second output voltage of the power conversion device 20 according to the first embodiment when the load current increases or decreases rapidly in FIG. 3. The horizontal axis of the upper right and lower right graphs of FIG. 5A indicates elapsed time, and the vertical axis indicates the values of the first output voltage and the second output voltage. The horizontal axis of the graph in the lower right in FIG. 5B indicates elapsed time, and the vertical axis indicates the values of the first output voltage and the second output voltage. In FIGS. 5A and 5B, the solid line indicates the value of the first output voltage, and the dashed line indicates the value of the second output voltage.

As illustrated in the upper left and lower left graphs of FIG. 5A, the first control unit 51 of the power conversion device 20 according to the first embodiment controls the first output voltage to be constant at 14 V, and the second control unit 52 controls the second output voltage to be constant at 13 V lower than the first voltage value. The first control unit 51 decreases the first output voltage when the value of the first output current increases to 200 A that is the first current control value. When the load current increases rapidly, as illustrated in the upper right graph of FIG. 5A, the change in the first output voltage becomes large when the load current is 200 A, so that undershoot of the second output voltage may occur.

Further, when the load current decreases rapidly, as illustrated in the lower right graph of FIG. 5A, the change in the first output voltage becomes large when the load current is 200 A, so that overshoot of the first output voltage may occur.

Further, during mass production of the DC-DC converters, the output voltages of each power conversion unit vary. Therefore, the output voltage difference between the first output voltage and the second output voltage may become large, depending on the combination of variations between the first output voltage of the first power conversion unit 41 and the second output voltage of the second power conversion unit 42.

For example, as illustrated in the upper graph of FIG. 5B, it is assumed that the first output voltage of the first power conversion unit 41 of the power conversion device 20 according to the first embodiment varies in the range A1 and the second output voltage of the second power conversion unit 42 varies in the range A2. In this case, as illustrated in the lower left graph of FIG. 5B, the maximum value of the output voltage difference between the first output voltage and the second output voltage is the range G obtained by adding the ranges A1 and A2, so that the output voltage difference between the first output voltage and the second output voltage becomes large. For this reason, when the load current rapidly changes to 200 A, the voltage difference from the first output voltage or the second output voltage becomes large, so that overshoot or undershoot may occur. For example, the lower right graph of FIG. 5B shows a state in which, when the load current decreases rapidly, the change in the first output voltage becomes large when the load current is 200 A, so that overshoot of the first output voltage has occurred.

Therefore, in the third embodiment, the first output voltage and the second output voltage are controlled so as to suppress undershoot and overshoot when the load current increases or decreases rapidly.

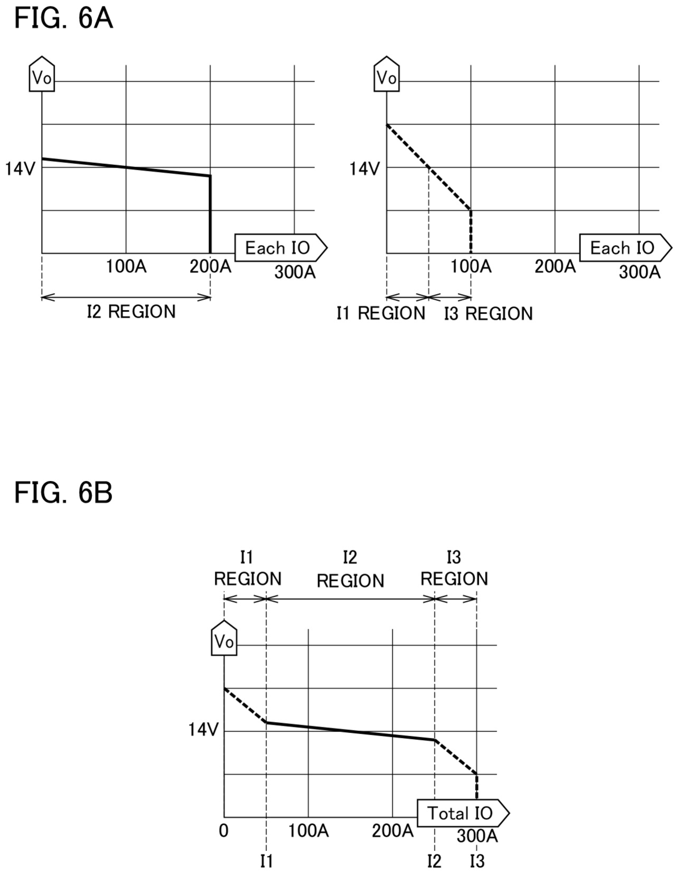

An example of the operation of the first control unit 51 and the second control unit 52 of the power conversion device 20 according to the third embodiment will be described with reference to FIGS. 6A and 6B.

FIG. 6A is a graph illustrating an example of the current-voltage characteristics of the first power conversion unit 41 and the second power conversion unit 42 when each of the first power conversion unit 41 and the second power conversion unit 42 of the power conversion device 20 according to the third embodiment is operated alone. In FIG. 6A, the horizontal axis indicates the values of the first output current and the second output current, and the vertical axis indicates the values of the first output voltage and the second output voltage. In FIG. 6A, the solid line indicates the value of the first output voltage, and the dashed line indicates the value of the second output voltage.

As illustrated in FIG. 6A, the absolute value of the slope of the current-voltage characteristic of the second power conversion unit 42 when the second power conversion unit 42 is operated alone is greater than the absolute value of the slope of the current-voltage characteristic of the first power conversion unit 41 when the first power conversion unit 41 is operated alone. That is, the decreasing width of the second output voltage relative to the second output current is larger than the decreasing width of the first output voltage relative to the first output current.

In FIG. 6A, it is assumed that the current-voltage characteristic of the first power conversion unit 41 is such that when the value of the first output current increases from 0 to 200 A that is the first current control value, the first output voltage decreases from the second voltage value to the third voltage value. In addition, it is assumed that the current-voltage characteristic of the second power conversion unit 42 is such that when the value of the second output current increases from 0 to 100 A that is the second current control value, the second output voltage decreases from the first voltage value greater than the second voltage value to the fourth voltage value less than the third voltage value.

FIG. 6B is a diagram explaining the operation of the first power conversion unit 41 and the second power conversion unit 42 in FIG. 6A. In FIG. 6B, the horizontal axis indicates the output current of the power conversion device 20, that is, the value of the load current output from the power conversion device 20 to the load 102, and the vertical axis indicates the values of the first output voltage and the second output voltage. In FIG. 6B, the solid line indicates the value of the first output voltage, and the dashed line indicates the value of the second output voltage.

In the example illustrated in FIG. 6B, the second control unit 52 controls the second output voltage such that the second output voltage decreases from the first voltage value to the second voltage value in the range where the value of the load current is equal to or greater than 0 and less than the first current value I1 (I1 region). The first control unit 51 controls the first output voltage such that the first output voltage decreases from the second voltage value to the third voltage value in the range where the value of the load current is equal to or greater than the first current value I1 and less than the second current value I2 (I2 region). The second control unit 52 controls the second output voltage such that the second output voltage decreases from the third voltage value to the fourth voltage value in the range where the value of the load current is equal to or greater than the second current value I2 and less than the third current value I3 (I3 region). Here, the amount of change in the load current in the I2 region is equal to the first current control value, and the sum of the amount of change in the load current in the I1 region and the amount of change in the load current in the I3 region is equal to the second current control value.

That is, in FIG. 6B, when the load current is in the range of the I1 region, the second output current is output only from the second power conversion unit 42. When the load current increases to the range of the I2 region, the power conversion unit to be operated is switched from the second power conversion unit 42 to the first power conversion unit 41, so that the first output current is output only from the first power conversion unit 41. When the load current increases to the range of the I3 region, the power conversion unit to be operated is switched from the first power conversion unit 41 to the second power conversion unit 42, so that the second output current is output only from the second power conversion unit 42.

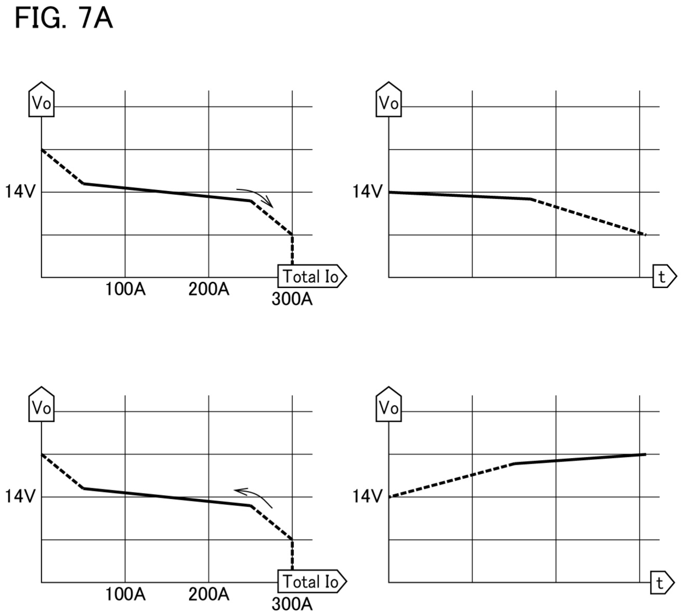

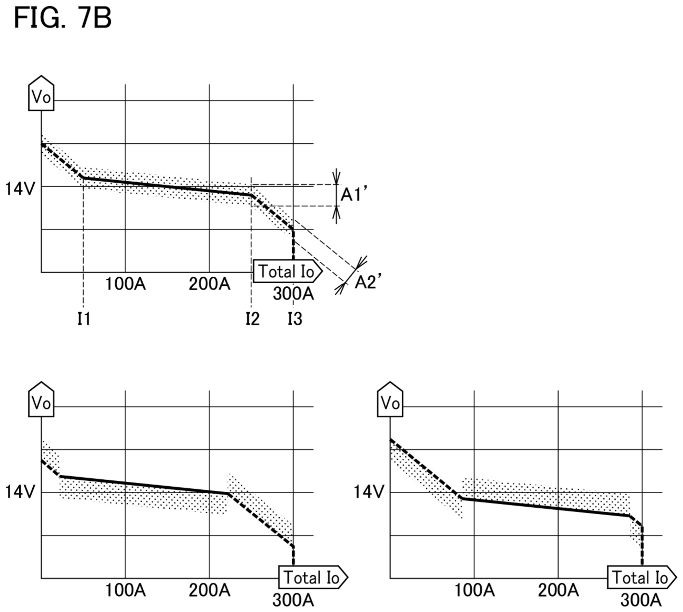

Here, the changes in the first output voltage and the second output voltage when the load current increases or decreases rapidly in FIG. 6B will be described with reference to FIGS. 7A and 7B. The horizontal axis of the upper right and lower right graphs of FIG. 7A indicates elapsed time, and the vertical axis indicates the values of the first output voltage and the second output voltage. The horizontal axis of each graph of FIG. 7B indicates the output current of the power conversion device 20, that is, the value of the load current output from the power conversion device 20 to the load 102, and the vertical axis indicates the values of the first output voltage and the second output voltage. In FIGS. 7A and 7B, the solid line indicates the value of the first output voltage, and the dashed line indicates the value of the second output voltage.

As illustrated in the upper right graph of FIG. 7A, even if the load current increases rapidly at the timing when the power conversion unit to be operated is switched from the first power conversion unit 41 to the second power conversion unit 42, the second output voltage decreases as the load current increases, so that the change in the output voltage at the timing when the power conversion unit to be operated is switched from the first power conversion unit 41 to the second power conversion unit 42 is suppressed. This suppresses undershoot of the second output voltage, thereby stabilizing the output voltage.

Further, as illustrated in the lower right graph of FIG. 7A, even if the load current decreases rapidly at the timing when the power conversion unit to be operated is switched from the second power conversion unit 42 to the first power conversion unit 41, the second output voltage increases as the load current decreases, so that the change in the output voltage at the timing when the power conversion unit to be operated is switched from the second power conversion unit 42 to the first power conversion unit 41 is suppressed. This suppresses undershoot of the first output voltage, thereby stabilizing the output voltage.

Further, as illustrated in the upper graph of FIG. 7B, it is assumed that the first output voltage of the first power conversion unit 41 varies in the range A1', and the second output voltage of the second power conversion unit 42 varies in the range A2'. At this time, for example, as illustrated in the lower left graph of FIG. 7B, even if the first output voltage varies to the highest value and the second output voltage varies to the lowest value, there is no difference in the output voltage between the first output voltage and the second output voltage. Furthermore, as illustrated in the lower right graph of FIG. 7B, even if the first output voltage varies to the lowest value and the second output voltage varies to the highest value, there is no difference in the output voltage between the first output voltage and the second output voltage. Therefore, even if the load current changes rapidly, occurrence of overshoot or undershoot of the first output voltage or the second output voltage can be suppressed.

### (Operation and effect)

As described above, according to the third embodiment, the following operation and effect can be obtained.

In the power conversion device 20 according to the third embodiment, the absolute value of the slope of the current-voltage characteristic of the second DC-DC converter 22 when the second DC-DC converter 22 is operated alone is greater than the absolute value of the slope of the current-voltage characteristic of the first DC-DC converter 21 when the first DC-DC converter 21 is operated alone. The current-voltage characteristic of the first DC-DC converter 21 is such that when the value of the first output current increases from 0 to the first current control value, the first output voltage decreases from the second voltage value to the third voltage value. The current-voltage characteristic of the second DC-DC converter 22 is such that when the value of the second output current increases from 0 to the second current control value, the second output voltage decreases from the first voltage value greater than the second voltage value to the fourth voltage value less than the third voltage value.

Further, the second control unit 52 of the power conversion device 20 according to the third embodiment controls the second output voltage such that the second output voltage decreases from the first voltage value to the second voltage value in the range where the value of the load current is equal to or greater than 0 and less than the first current value I1. The first control unit 51 controls the first output voltage such that the first output voltage decreases from the second voltage value to the third voltage value in the range where the value of the load current is equal to or greater than the first current value I1 and less than the second current value I2. The second control unit 52 controls the second output voltage such that the second output voltage decreases from the third voltage value to the fourth voltage value in the range where the value of the load current is equal to or greater than the second current value I2 and less than the third current value I3.

In the power conversion device 20 according to the third embodiment, the second DC-DC converter 22 outputs the second output current before the first DC-DC converter 21. Since the current-voltage characteristic of the second DC-DC converter 22 has a larger slope than the current-voltage characteristic of the first DC-DC converter 21 and the second output voltage decreases as the load current increases, the change in the output voltage at the time of switching between the first DC-DC converter 21 and the second DC-DC converter 22 is suppressed. This makes it possible to suppress undershoot and overshoot of the first output voltage and the second output voltage.

Moreover, even if there is a variation in the first output voltage of the first power conversion unit 41 and the second output voltage of the second power conversion unit 42, there is no difference in the output voltage between the first output voltage and the second output voltage, so that undershoot and overshoot of the first output voltage and the second output voltage can be suppressed. This stabilizes the first output voltage and the second output voltage, thereby making it possible to suppress the breakdown of the internal circuits of the first and second power conversion units 41 and 42.

### [Fourth Embodiment]

Hereinafter, a fourth embodiment to which the present invention is applied will be described with reference to the drawings. In the drawings, the same parts are denoted by the same reference numerals, and a detailed description thereof will be omitted. The power conversion device according to the fourth embodiment differs from the power conversion device according to the other embodiments in the operation of the first control unit 51 and the second control unit 52. The other configurations are the same as those of the power conversion device 20 illustrated in FIG. 2. Therefore, the different parts will be described mainly, and the same parts will not be described again.

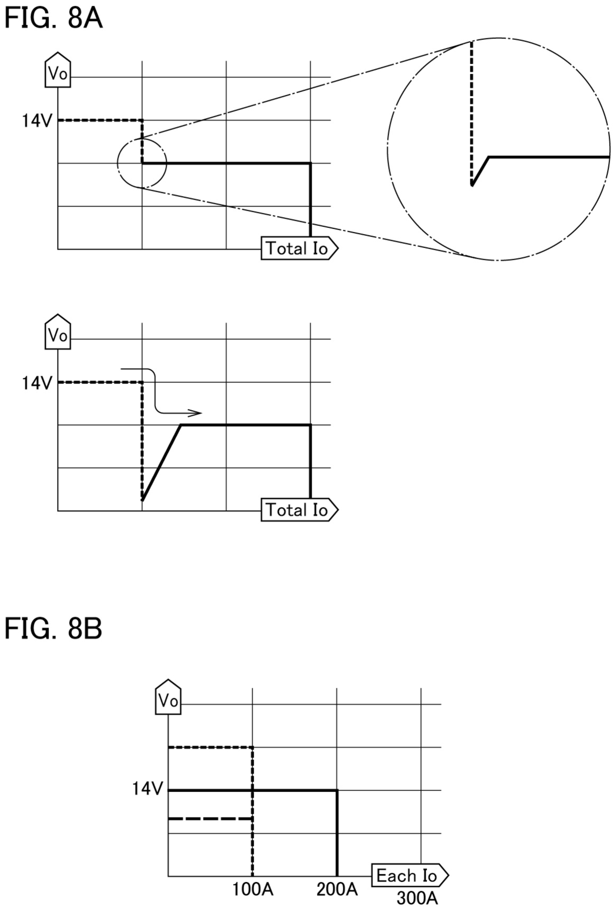

FIG. 8A is a diagram explaining the changes in the first output voltage and the second output voltage when the second output voltage decreases from 14 V in FIG. 4. In FIG. 4, the second control unit 52 decreases the second output voltage from 14 V when the value of the second output current becomes 100 A that is the second current control value. As illustrated in the upper graph of FIG. 8A, when the second control unit 52 decreases the second output voltage, the first output voltage of the first power conversion unit 41 connected in parallel to the second power conversion unit 42 also decreases. The first power conversion unit 41 outputs the first output current after detecting the voltage reduction of the first output voltage at this time.

Thus, in the case of decreasing the first or second output voltage when the value of the first or second output current becomes the first or second current control value, when the load current increases rapidly, a rise of the first output voltage takes time as illustrated in the lower graph of FIG. 8A, so that the voltage drop from the second output voltage to the first output voltage becomes large.

Therefore, in the fourth embodiment, the second output voltage of the second power conversion unit 42 is controlled so as to suppress the voltage drop when the load current increases rapidly.

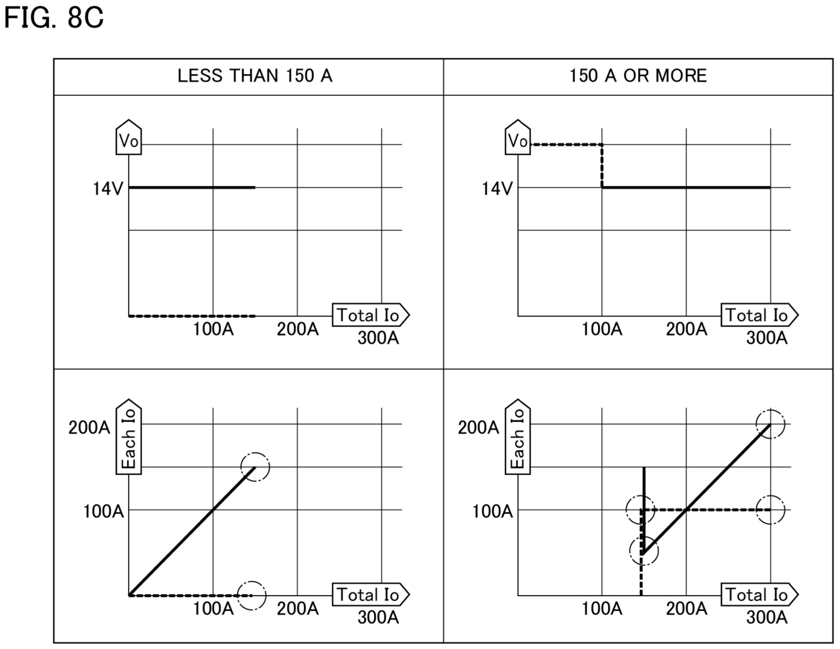

An example of the operation of the first control unit 51 and the second control unit 52 of the power conversion device 20 according to the fourth embodiment will be described with reference to FIGS. 8B and 8C.

FIG. 8B is a graph illustrating an example of the current-voltage characteristics of the first power conversion unit 41 and the second power conversion unit 42 when each of the first power conversion unit 41 and the second power conversion unit 42 of the power conversion device 20 according to the fourth embodiment is operated alone. In FIG. 8B, the horizontal axis indicates the values of the first output current and the second output current, and the vertical axis indicates the values of the first output voltage and the second output voltage. In FIG. 8B, the solid line indicates the value of the first output voltage, and the dashed line indicates the value of the second output voltage.

FIG. 8C is a diagram explaining the operation of the first power conversion unit 41 and the second power conversion unit 42 in FIG. 8B. In the upper left and upper right graphs of FIG. 8C, the horizontal axis indicates the output current of the power conversion device 20, that is, the value of the load current output from the power conversion device 20 to the load 102, and the vertical axis indicates the values of the first output voltage and the second output voltage. In the upper left and upper right graphs of FIG. 8C, the solid line indicates the value of the first output voltage, and the dashed line indicates the value of the second output voltage.

In the example illustrated in FIGS. 8B and 8C, the first control unit 51 controls the first output voltage to be constant at 14 V (the first voltage value). In addition, the second control unit 52 controls the second output voltage to be constant at a value (the second voltage value) lower than 14 V until the value of the load current becomes the first current control value. When the value of the load current increases to a value lower than the first current control value by a predetermined value, the second control unit 52 switches the second output voltage to 15 V (the third voltage value) that is higher than the first output voltage. Here, the values of the first output voltage and the second output voltage are not limited as long as the second output voltage is set to be switchable from a value lower than the first output voltage to a value higher than the first output voltage.

As illustrated in FIG. 8C, from the region of 0 A until the region of 150 A in which the first current control value is 50 A lower than 200 A, only the first power conversion unit 41, which has a higher output voltage than the second power conversion unit 42, outputs the first output current and undertakes all the load currents alone. In the region where the current value of the load current is 150 A or more, the load current is output from both the first power conversion unit 41 and the second power conversion unit 42 connected in parallel. In the region where the current value of the load current is 150 A or more, firstly, the second output current increases from the second output voltage on the high voltage side. Then, when the second output current from the second output voltage runs out, the first output current output from the first output voltage on the low voltage side compensates for the shortage. Specifically, when the current value of the load current increases to 150 A, the second output voltage is switched to 15 V, and the second power conversion unit 42, which has a higher output voltage than the first power conversion unit 41, starts to output the second output current. The second power conversion unit 42 increases the second output current until the second output voltage is consumed. In FIG. 8C, the second output current increases until the current value of the second output current becomes 100 A. Thereafter, when the load current further increases after the current value of the second output current becomes 100 A, the first output current of the first power conversion unit 41 starts to increase again. The first power conversion unit 41 can undertake the increase in the load current from after the current value of the second output current becomes 100 A up to a total of 300 A.

That is, until the load current becomes 150 A, which is 50 A lower than 200 A, which is the first current control value, the first output current is output only from the first power conversion unit 41. When the load current increases and becomes 150 A, the second control unit 52 switches the second output voltage to 15 V which is higher than the first output voltage. Accordingly, the second power conversion unit 42 outputs the second output current before the load current becomes 200 A which is the first current control value. Therefore, even when the load current increases rapidly, the voltage drop from the first output voltage to the second output voltage can be suppressed.

### (Operation and effect)

As described above, according to the fourth embodiment, the following operation and effect can be obtained.

The first control unit 51 of the power conversion device 20 according to the fourth embodiment controls the first output voltage to the first voltage value, and the second control unit 52 controls the second output voltage to the second voltage value lower than the first voltage value. The first control unit 51 decreases the first output voltage when the value of the first output current increases to the first current control value. The second control unit 52 switches the second output voltage to the third voltage value higher than the first voltage value when a value of the load current increases to a value lower than the first current control value by a predetermined value.

The second control unit 52 can switch the second output voltage to the third voltage value higher than the first output voltage before the load current increases to the first current control value and the first control unit 51 decreases the first output voltage. Therefore, the voltage drop when the load current increases rapidly can be suppressed.

### (Modified example)

Hereinafter, a modified example of the fourth embodiment to which the present invention is applied will be described with reference to the drawings. The second control unit 52 of the power conversion device 20 according to the modified example of the fourth embodiment switches the second output voltage to the third voltage value higher than the first voltage value, based on a current occupancy rate IL/I, which is a ratio of a value of the load current to a value I lower than the first current control value by a predetermined value, and a current change rate di/dt, which is a change rate of a value of the load current per unit time.

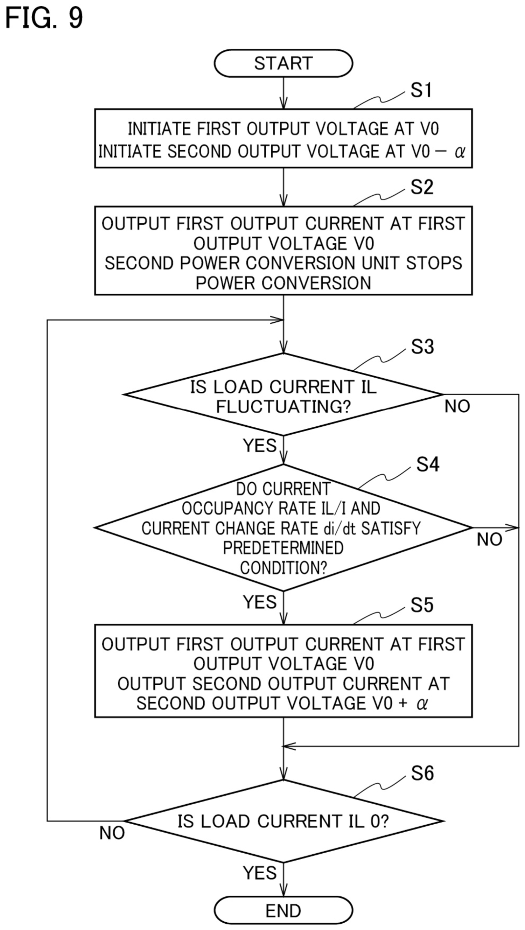

An example of the operation of the first control unit 51 and the second control unit 52 of the power conversion device 20 according to a first modified example of the third embodiment will be described with reference to a flowchart of FIG. 9. First, in step S1 of FIG. 9, the first control unit 51 sets the first output voltage to the first voltage value V0 and initiates the first power conversion unit 41. The second control unit 52 sets the second output voltage to the second voltage value V0 - α which is lower than the first voltage value V0, and initiates the second power conversion unit 42.

In step S2, the first power conversion unit 41 outputs the first output current at the first voltage value V0. Meanwhile, the second power conversion unit 42, which has a lower output voltage than the first power conversion unit 41, stops power conversion.

In step S3, the second control unit 52 determines whether the load current IL is fluctuating. Specifically, the second control unit 52 determines whether the load current IL detected by the load current value detection unit 80 is increasing or decreasing. If the load current IL is fluctuating (YES in step S3), the processing proceeds to step S4. Meanwhile, if the load current IL is not fluctuating (YES in step S3), the processing proceeds to step S6.

In step S4, the second control unit 52 determines whether the current occupancy rate IL/I, which is the ratio of the value of the load current IL to the value I lower than the first current control value by a predetermined value, and the current change rate di/dt, which is the change rate of the value of the load current IL per unit time, satisfy a predetermined condition.

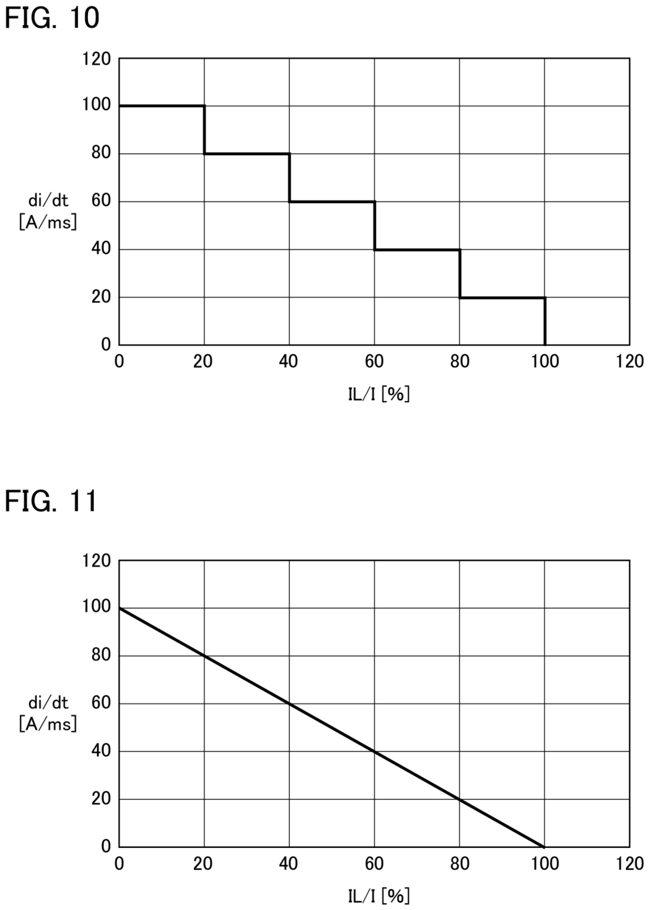

For example, the second control unit 52 determines whether the current occupancy rate IL/I and the current change rate di/dt satisfy any of the following conditions (1) to (6). In this case, the range in which the current occupancy rate IL/I and the current change rate di/dt satisfy the following conditions (1) to (6) is positioned in the upper right range of the graph illustrated in FIG. 10.

(1) When the current change rate di/dt is greater than 100 A/ms, (2) when the current occupancy rate IL/I is greater than 20% and the current change rate di/dt is greater than 80 A/ms, (3) when the current occupancy rate IL/I is greater than 40% and the current change rate di/dt is greater than 60 A/ms, (4) when the current occupancy rate IL/I is greater than 60% and the current change rate di/dt is greater than 40 A/ms, (5) when the current occupancy rate IL/I is greater than 80% and the current change rate di/dt is greater than 20 A/ms, and (6) when the current occupancy rate IL/I is 100%.

Returning to FIG. 9, when the current occupancy rate IL/I and the current change rate di/dt satisfy the predetermined condition (YES in step S4), the processing proceeds to step S5. Meanwhile, if the current occupancy rate IL/I and the current change rate di/dt do not satisfy the predetermined condition (NO in step S4), the processing proceeds to step S6.

In step S5, the second control unit 52 switches the second output voltage to the third voltage value V0 + α which is higher than the first voltage value V0. Thereafter, the second power conversion unit 42 outputs the second output current at the third voltage value V0 + α. In addition, the first power conversion unit 41 outputs the first output current at the first voltage value V0.

In step S6, the first control unit and the second control unit determine whether the load current IL is 0, that is, whether the power supply from the power conversion device 20 is finished. If the load current IL is 0 (YES in step S6), the first control unit 51 and the second control unit 52 terminate the operation illustrated in FIG. 9. Meanwhile, if the load current IL is not 0 (NO in step S6), the processing returns to step S3.

In step S4 of FIG. 9, the second control unit 52 may determine that the current occupancy rate IL/I and the current change rate di/dt satisfy the predetermined condition when the value of the load current IL changes dynamically and the current occupancy rate IL/I is greater than the value obtained by subtracting the current change rate di/dt from 100. In this case, the range in which the current occupancy rate IL/I and the current change rate di/dt satisfy the predetermined condition is positioned in the upper right range of the graph illustrated in FIG. 11.

As described above, in the modified example of the third embodiment, the threshold for switching the value of the second output voltage to the value higher than the value of the first output voltage is set according to the current occupancy rate IL/I and the current change rate di/dt. Thus, the value of the second output voltage can be switched to a value higher than the value of the first output voltage according to the change rate of the load current. Therefore, when the load current changes rapidly, the output voltage can be more stabilized.

### [Fifth Embodiment]

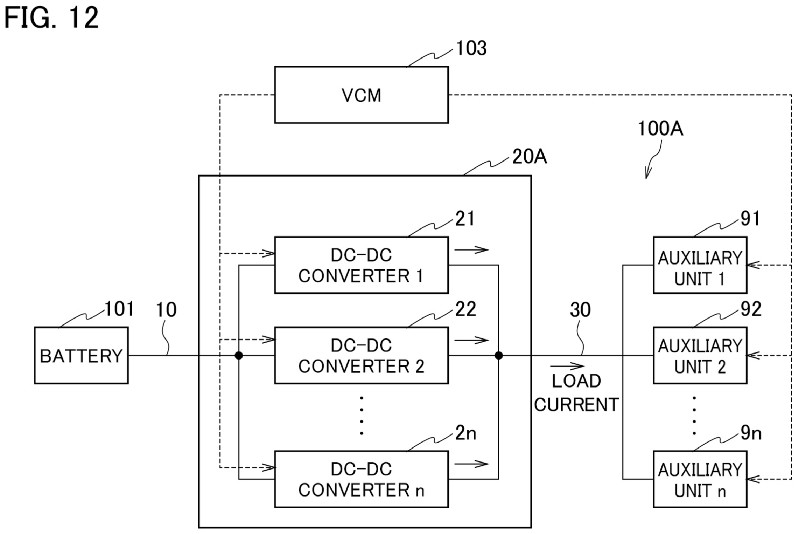

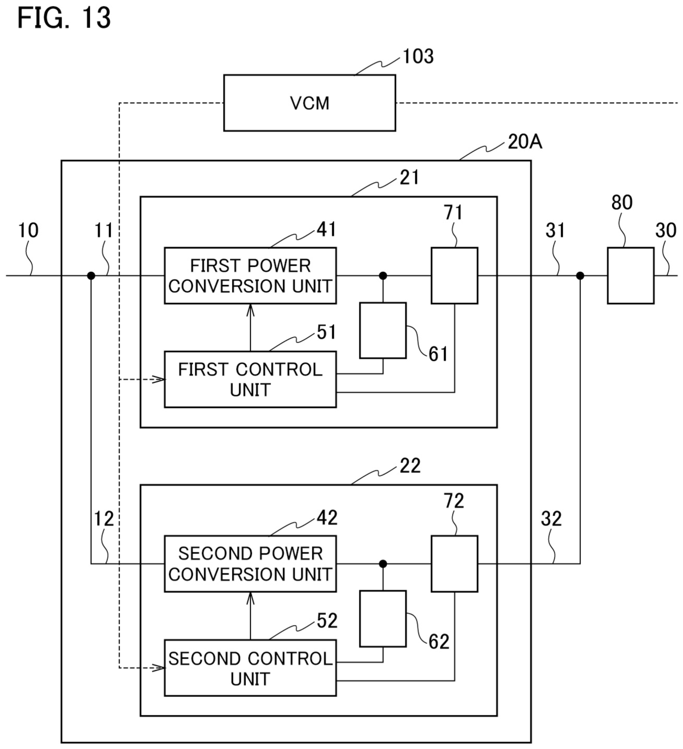

Hereinafter, a fifth embodiment to which the present invention is applied will be described with reference to FIGS. 12 and 13. In the drawings, the same parts are denoted by the same reference numerals, and a detailed description thereof will be omitted.

FIG. 12 is a block diagram schematically illustrating an in-vehicle power supply system including a power conversion device according to the fifth embodiment. The power supply system 100A illustrated in FIG. 12 differs from the power supply system 100 according to the other embodiments in that the power supply system 100A includes a vehicle control module (VCM) 103 that controls the entire vehicle, and supplies a constant DC voltage as the load 102 to the auxiliary units 91 to 9n. The other configurations are the same as those of the power supply system 100 illustrated in FIG. 1. In addition, a power conversion device 20A according to the fifth embodiment differs from the power conversion device 20 according to the other embodiments in that the power conversion device 20A receives from the VCM 103 a signal indicating a voltage value which is required to be output from the power conversion device 20A. The other configurations are the same as those of the power conversion device 20 illustrated in FIG. 2. Therefore, the different parts will be described mainly, and the same parts will not be described again.

The power supply system 100A can function as an in-vehicle DC voltage supply system installed in a vehicle such as an electric vehicle. The power supply system 100A can supply a constant DC voltage to the auxiliary units 91 to 9n. The power supply system 100A includes the power conversion device 20A and the battery 101.

The auxiliary units 91 to 9n may be any electrical device as long as it is installed in the vehicle, and may be, for example, an accessory device (cell motor, alternator, radiator cooling fan, or the like) required to operate an engine or a motor. The type and number of the auxiliary units 91 to 9n are not limited, and the auxiliary units 91 to 9n may include an electric power steering system, an electric parking brake, a lighting system, a wiper drive unit, a navigation system, and the like. The auxiliary units 91 to 9n are connected to the VCM 103 controlling the entire vehicle, and receive various signals from the VCM 103.

The power conversion device 20A includes multiple DC-DC converters 21 to 2n. The multiple DC-DC converters 21 to 2n are connected in parallel between the first conductive path 10 and the second conductive path 30. Each of the multiple DC-DC converters 21 to 2n is connected to the VCM 103, and receives various signals from the VCM 103. The VCM 103 broadcasts a signal indicating a voltage value which is required to be output from the power conversion device 20A to each of the multiple DC-DC converters 21 to 2n and the auxiliary units 91 to 9n.

In the following description, the fifth embodiment to which the present invention is applied will be described with reference to the drawings, taking as an example a case in which two DC-DC converters are connected in parallel. In the drawings, the same parts are denoted by the same reference numerals and a description thereof will be omitted.

FIG. 13 is a block diagram illustrating an example of a configuration of the power conversion device 20A according to the fifth embodiment. For example, the power conversion device 20A includes two DC-DC converters (first and second DC-DC converters) 21 and 22 connected in parallel. The first and second DC-DC converters 21 and 22 are connected to the VCM 103. The VCM 103 broadcasts a signal indicating a voltage value which is required to be output from the power conversion device 20A to each of the first and second DC-DC converters 21 and 22 and the auxiliary units 91 to 9n.

The first control unit 51 of the power conversion device 20A according to the fifth embodiment receives a signal indicating a voltage value, which is required to be output from the power conversion device 20A, which is broadcasted from the VCM 103. The first control unit 51 calculates a set value required to operate the first power conversion unit 41 based on the signal received from the VCM 103, and sets the set value to the first power conversion unit 41. For example, the first control unit 51 sets the first output voltage based on the signal received from the VCM 103. Since the other operations of the first control unit 51 are the same as those of the first control unit 51 of the power conversion device 20 according to the other embodiments, a description thereof will be omitted.

The second control unit 52 of the power conversion device 20A according to the fifth embodiment receives a signal indicating a voltage value, which is required to be output from the power conversion device 20A, which is broadcasted from the VCM 103. The second control unit 52 calculates a set value required to operate the second power conversion unit 42 based on the signal received from the VCM 103, and sets the set value to the second power conversion unit 42. For example, the second control unit 52 sets the second output voltage based on the signal received from the VCM 103. Since the other operations of the second control unit 52 are the same as those of the second control unit 52 of the power conversion device 20 according to the other embodiments, a description thereof will be omitted.

### (Operation and effect)

As described above, according to the fifth embodiment, the following operation and effect can be obtained.

The multiple DC-DC converters 21 to 2n of the power conversion device 20A according to the fifth embodiment receive a signal indicating a voltage value, which is required to be output from the power conversion device 20A, which is broadcasted from the VCM 103 controlling the entire vehicle. Each of the multiple DC-DC converters 21 to 2n has a control unit that controls a value of an output voltage of each of the multiple DC-DC converters 21 to 2n such that a value of an output current of each of the multiple DC-DC converters 21 to 2n does not exceed the current control value, based on the signal received from the VCM 103.

This makes it possible to control the multiple DC-DC converters 21 to 2n appropriately according to the state of the load connected to the output of the power conversion device 20 without providing a central control unit for parallel operation that transmits a control signal to each DC-DC converter for performing a parallel operation by cooperating the multiple DC-DC converters connected in parallel, apart from the VCM 102 controlling the entire vehicle. In addition, a signal line connecting the central control unit and each DC-DC converter is not required. Therefore, the configuration of the power conversion device can be further simplified. This makes it possible to decrease the manufacturing cost of the power conversion device 20. Further, this allows for space-saving in the installation space for the signal line. The influence of noise on the signal line can be eliminated, thereby suppressing a malfunction in the vehicle under high noise conditions.

### [REFERENCE SIGNS LIST]

- 20: Power conversion device
- 21: First DC-DC converter
- 22: Second DC-DC converter
- 21 to 2n: Multiple DC-DC converters
- 51: First control unit
- 52: Second control unit

## Claims

1. A power conversion device in which multiple DC-DC converters are connected in parallel, wherein
each of the multiple DC-DC converters has a current control value set as a maximum current value capable of being output, and each of the multiple DC-DC converters has a control unit configured to control a value of an output voltage of each of the multiple DC-DC converters such that a value of an output current of each of the multiple DC-DC converters does not exceed the current control value, and
a power capacity and the current control value of a first DC-DC converter included in the multiple DC-DC converters differ from the power capacity and the current control value of a second DC-DC converter included in the multiple DC-DC converters.

2. The power conversion device according to claim 1, wherein
a current-voltage characteristic of each of the multiple DC-DC converters when each of the multiple DC-DC converters is operated alone is constant.

3. The power conversion device according to claim 2, wherein
the multiple DC-DC converters include the first DC-DC converter and the second DC-DC converter,
the first DC-DC converter has a first current control value set as a maximum current value capable of being output, and the first DC-DC converter has a first control unit that controls a first output voltage that is an output voltage of the first DC-DC converter such that a value of a first output current that is an output current of the first DC-DC converter does not exceed the first current control value,
the second DC-DC converter has a second current control value set as a maximum current value capable of being output, and the second DC-DC converter has a second control unit that controls a second output voltage that is an output voltage of the second DC-DC converter such that a value of a second output current that is an output current of the second DC-DC converter does not exceed the second current control value, and
the power capacity of the second DC-DC converter is smaller than the power capacity of the first DC-DC converter, and the second current control value is lower than the first current control value.

4. The power conversion device according to claim 3, wherein
each of the current-voltage characteristics of the first and second DC-DC converters when each of the first and second DC-DC converters is operated alone is such that values of the first output voltage and the second output voltage are constant relative to values of the first output current and the second output current.

5. The power conversion device according to claim 4, wherein
the first control unit controls the first output voltage to a first voltage value,
the second control unit controls the second output voltage to a second voltage value less than the first voltage value, and
the first control unit decreases the first output voltage when a value of the first output current increases to the first current control value.

6. The power conversion device according to claim 4, wherein
the second control unit controls the second output voltage to a first voltage value,
the first control unit controls the first output voltage to a second voltage value lower than the first voltage value, and
the second control unit decreases the second output voltage when a value of the second output current increases to the second current control value.

7. The power conversion device according to claim 3, wherein
an absolute value of a slope of the current-voltage characteristic of the second DC-DC converter when the second DC-DC converter is operated alone is greater than an absolute value of a slope of the current-voltage characteristic of the first DC-DC converter when the first DC-DC converter is operated alone,
the current-voltage characteristic of the first DC-DC converter is such that when a value of the first output current increases from 0 to the first current control value, the first output voltage decreases from a second voltage value to a third voltage value, and
the current-voltage characteristic of the second DC-DC converter is such that when a value of the second output current increases from 0 to the second current control value, the second output voltage decreases from a first voltage value greater than the second voltage value to a fourth voltage value less than the third voltage value.

8. The power conversion device according to claim 7, wherein
the second control unit controls the second output voltage such that the second output voltage decreases from a first voltage value to a second voltage value in a range where a value of the output current is equal to or greater than 0 and less than the first current value,
the first control unit controls the first output voltage such that the first output voltage decreases from the second voltage value to the third voltage value in a range where a value of the output current is equal to or greater than the first current value and less than the second current value, and
the second control unit controls the second output voltage such that the second output voltage decreases from the third voltage value to the fourth voltage value in a range where a value of the output current is equal to or greater than the second current value and less than the third current value.

9. The power conversion device according to claim 5, wherein
the second control unit switches the second output voltage to the third voltage value higher than the first voltage value when a value of the output current increases to a value lower than the first current control value by a predetermined value.

10. The power conversion device according to claim 5, wherein
the second control unit switches the second output voltage to the third voltage value higher than the first voltage value when satisfying a predetermined condition based on a current occupancy rate, which is a ratio of a value of the output current to a value lower than the first current control value by a predetermined value, and a current change rate, which is a change rate of a value of the output current per unit time.

11. The power conversion device according to claim 10, wherein
the predetermined condition is any of the following:
when the current change rate is greater than 100 A/ms,
when the current occupancy rate is greater than 20% and the current change rate is greater than 80 A/ms,
when the current occupancy rate is greater than 40% and the current change rate is greater than 60 A/ms,
when the current occupancy rate is greater than 60% and the current change rate is greater than 40 A/ms,
when the current occupancy rate is greater than 80% and the current change rate is greater than 20 A/ms, and
when the current occupancy rate is 100%.

12. The power conversion device according to claim 10, wherein
the predetermined condition is such that when a value of the output current changes dynamically and the current occupancy rate is greater than a value obtained by subtracting the current change rate from 100.
